# EUROPÄISCHE PATENTANMELDUNG

(11) **EP 1 561 871 A2**
(43) Veröffentlichungstag der Anmeldung: **10.08.2005**
(21) Anmeldenummer: 05002450.4
(22) Anmeldetag: 04.02.2005
(51) Int. Cl.: E03F 5/10

(54) **Drosselantrieb**

(30) Priorität: 05.02.2004 DE 102004005895; 14.02.2004 DE 102004007326
(71) Anmelder: Steinhardt, Jörg-Michael, Dipl.-Ing., 65232 Taunusstein (DE)
(72) Erfinder: Mikoleizig, Egenhadt, 71522 Backnang (DE)
(74) Vertreter: Quermann, Helmut, Dipl.-Ing.

(57) **Zusammenfassung**

Die Erfindung betrifft einen Drosselantrieb (1) für eine Armatur, zum konstanten Entleeren eines Schachtes oder Behälters bei wechselnden Flüssigkeitshöhen.

Erfindungsgemäß ist ein Gehäuse (4) und ein Stellteil (3) vorgesehen, das auf Grund der durch die wechselnde Flüssigkeitshöhe bedingten Druckdifferenz axial im Gehäuse (4) beweglich ist. Ferner weist der Drosselantrieb eine Einrichtung (2) zur Rückstellung des Stellteils auf, deren erforderliche Potenzialkraft zur Rückstellung des Stellteils beim Bewegen des Stellteils in Folge Erhöhung der Druckdifferenz erzeugt wird, wobei die Einrichtung bei Druckverringerung die Rückstellung des Stellteils erzwingt.

## Beschreibung

Die Erfindung betrifft einen Drosselantrieb für eine Armatur zum konstanten Entleeren eines Schachtes oder Behälters bei wechselnden Flüssigkeitshöhen.

Zur konstanten Entleerung eines Schachtes oder sonstigen Behälters mit wechselnden Flüssigkeitsständen werden, nach heutigem Stand der Technik, die Ablaufrohre durch Schieber, Klappen oder sonstiger Armaturen mit Elektromotoren, Auftriebskraft oder von Hand gedrosselt.

Der Drosselantrieb für die Armatur ist beispielsweise als Schwimmer ausgebildet. Ein solcher Abflussmengenregler mit Schwimmer ist beispielsweise aus der DE 32 40 902 A1 und DE 34 18 348 C2 bekannt. Ein druckbetriebener Abflussmengenregler ist in der EP 0 707 254 A2 beschrieben.

Aufgabe der Erfindung ist es, einen Drosselantrieb für eine Armatur zu schaffen, der bei einfacher Bauweise ein konstantes Entleeren eines Schachtes oder Behältnisses bei wechselnden Flüssigkeitshöhen gestattet.

Die Erfindung schlägt einen Drosselantrieb vor, der gekennzeichnet ist durch ein Gehäuse und ein Stellteil, das auf Grund der durch die wechselnde Flüssigkeitshöhe bedingten Druckdifferenz axial im Gehäuse beweglich ist, sowie durch eine Einrichtung zur Rückstellung des Stellteils, deren erforderliche Potenzialkraft zur Rückstellung des Stellteils beim Bewegen des Stellteils in Folge Erhöhung der Druckdifferenz erzeugt wird, wobei die Einrichtung bei Druckverringerung die Rückstellung des Stellteils erzwingt.

Der Drosselantrieb, bei dem die Einrichtung zur Rückstellung des Stellteils beispielsweise als Gegengewicht ausgebildet ist, nutzt die wechselnden Wasserhöhen, um mit dem Stellteil, das beispielsweise als Kolben ausgebildet ist, die Druckdifferenz der anstehenden Wassersäule zur Umwelt zu nutzen und eine Axialkraft zu erzeugen. Die vom Wasserstand abhängige Axialkraft wird insbesondere mit einem Hebel in eine Drehbewegung umgeleitet und bewegt insbesondere eine Welle. Das so erzeugte Drehmoment wird durch das Gegengewicht, das über Hebelwirkung mit der Welle verbunden ist, ausgeglichen, sodass bei steigendem Wasser das Gegengewicht ansteigt und je nach Wasserstand eine Wellenteildrehung erzwungen wird. Diese Wellenteildrehung wird als Antrieb der Armatur benutzt, mit dem Vorteil, dass eine Drosselung abhängig von der Wasserhöhe erfolgt.

Eine oder mehrere Gegengewichte bewirken zusätzlich, dass sich der Querschnitt eines Ablaufrohres in Abhängigkeit von der Wasserhöhe so verringert, dass eine fast konstante Abflussmenge erzielt wird. Gleichzeitig sorgt das Gegengewicht bei fallender Wassersäule für eine Rückstellung des Kolbens, sodass ein freier Ablauf ermöglicht wird.

Der Drosselantrieb mit Einrichtung zur Rückstellung des Stellteils, die insbesondere als Gegengewicht ausgebildet ist, wirkt mechanisch. Der Drosselantrieb kann in Art eines Drosselventils ausgebildet sein.

Zur konstanten Entleerung des Schachtes oder sonstigen Behälters mit wechselnden Flüssigkeitshöhen wird das Drosselventil beispielsweise vor der Ablauföffnung des Schachtes so angebracht, das eine Änderung der Flüssigkeitshöhe im Schacht eine Druckdifferenz zwischen dem Kolben des Ventils und Ablauföffnung bewirkt und der Kolben des Ventils zum Druckausgleich axial betätigt wird.

Über ein Gegengewicht wird die Hubhöhe des Kolbens des Ventils und damit die Reduzierung des Ablaufquerschnitts so geregelt, dass abhängig vom Gegengewicht mit Hebellänge und Axialkraft des Kolbens des Ventils mit zugehöriger Hebellänge durch Absenkung des Kolbens des Ventils, ein konstantes Drehmoment im Drehlager bei verschiedenen Flüssigkeitsständen erreicht wird.

Bei steigender Flüssigkeitshöhe im Behälter wird somit eine proportionale Verringerung des Ablaufquerschnitts im Gehäuse des Ventils erzwungen und eine annähernd konstante Ablaufmenge ermöglicht. Bei sinkender Flüssigkeitshöhe wird durch das Gegengewicht der Kolben des Ventils wieder angehoben und ein freier Ablauf ermöglicht.

Der Drosselantrieb ist im Schacht oder Behälter angeordnet und es wird das Stellteil, insbesondere der Kolben, entsprechend der aus der wechselnden Flüssigkeitshöhe im Schacht bzw. im Behälter resultierenden Druckdifferenz zwischen Stellteil und Ablauföffnung beaufschlagt.

Weitere Merkmale der Erfindung sind in den Unteransprüchen, der Beschreibung, der Figuren und den Figuren selbst dargestellt, wobei bemerkt wird, dass alle Einzelmerkmale und alle Kombinationen von Einzelmerkmalen weiterere erfinderische Ausgestaltungen darstellen.

Mehrere beispielhafte Ausführungsformen werden nachfolgend unter Hinweis auf die Zeichnungen näher erläutert. Es zeigen:
- Figur 1: eine erste Ausführungsform des erfindungsgemäßen Drosselantriebs, in schematischer Darstellung, bei rückgestelltem Kolben, somit verringerten Druck und abgesenktem Gegengewicht, in einer Seitenansicht veranschaulicht,
- Figur 2: den Drosselantrieb gemäß Figur 1 in einer Draufsicht,
- Figur 3: den in Figur 3 gezeigten Drosselantrieb bei angehobenem Gegengewicht und erhöhter Druckdifferenz,
- Figur 4: den in Figur 3 gezeigten Drosselantrieb in einer Draufsicht,
- Figur 5: eine Anordnung bestehend aus Drosselantrieb und Armatur, veranschaulicht in einer schematischen Seitenansicht,
- Figur 6: eine Ausführungsform, bei der der Drosselantrieb als Drosselventil ausgebildet ist, bei angehobenem Kolben des Ventils und abgesenktem Gegengewicht, in einer schematischen Darstellung für eine Seitenansicht veranschaulicht,
- Figur 7: das in der Figur 6 veranschaulichte Drosselventil in einer Draufsicht.

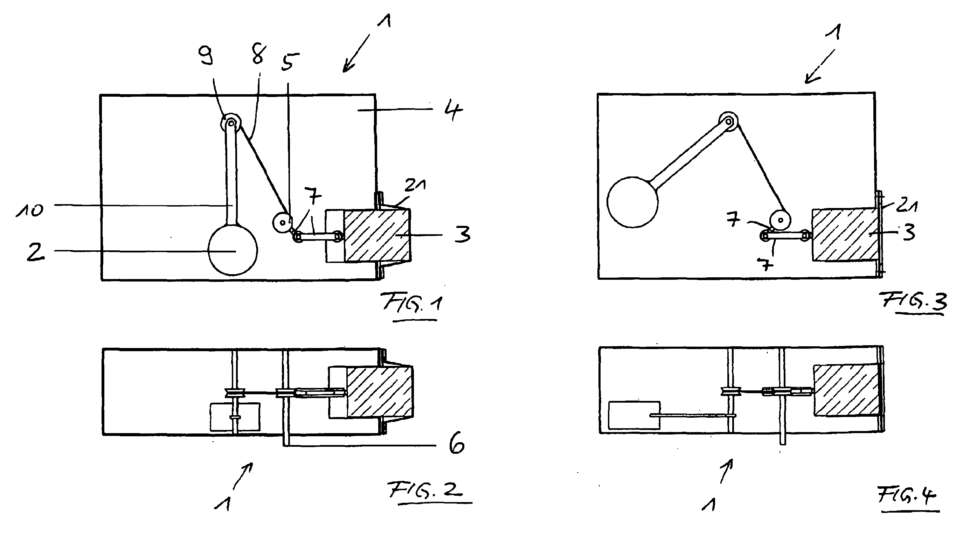

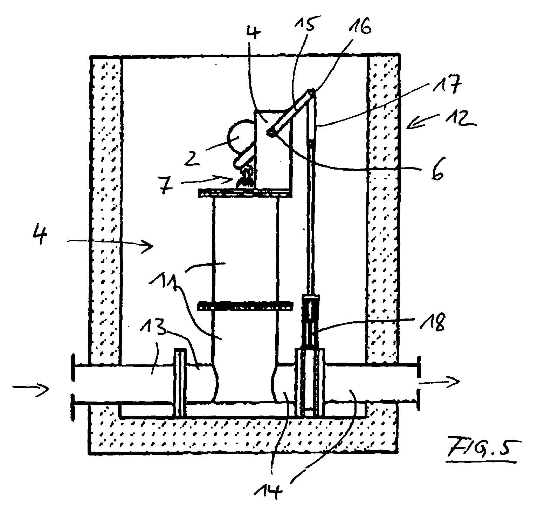

Bei der zu den Figuren 1 bis 4 veranschaulichten Ausführungsform, verdeutlichen die Figuren 1 und 2 den Zustand des Drosselantriebs 1 bei Druckverringerung, bei der das Gegengewicht 2 eine Rückstellung des Kolbens 3 erzwingt, und die Figuren 3 und 4 den Zustand bei Erhöhung der Druckdifferenz, bei der das Gegengewicht 2 angehoben wird.

Der Drosselantrieb 1 umfasst das Gehäuse 4 und den mindestens einen nach außen geführten Kolben 3, der so angeordnet ist, das eine Druckänderung zum Gehäuseinneren eine Axialbewegung des Kolbens 3 erzwingt und über Hebelwirkung eine Teildrehung eines Drehlagers 5 mit Welle 6 erzeugt wird. Ein oder mehrere Gegengewichte 2 sind über das Drehlager 5 so mit dem Kolben 3 verbunden, dass bei Erhöhung der Druckdifferenz das Gegengewicht 2 angehoben wird (Figuren 3 und 4) sowie bei Druckverringerung das Gegengewicht 2 eine Rückstellung des Kolbens 3 erzwingt (Figuren 1 und 2). Die über das Drehlager 5 angetriebene Welle 6 ist aus dem Gehäuse 4 geführt und es wird die Drehung der Welle 6 zur Betätigung der Armatur genutzt. Für die erforderliche Potenzialkraft zur Rückstellung des Kolbens 3 an Stelle des Gegengewichts 2 kann eine Federkraft oder ein anderer Energiespeicher genutzt werden. An Stelle des Kolbens 3 kann die axiale Kraftübertragung durch eine Membrane oder andere Elastomere erbracht werden.

Der Drosselantrieb mit Gegengewicht 2 nutzt die wechselnden Wasserhöhen, um mit dem Kolben 3 die Druckdifferenz der anstehenden Wassersäule zur Umwelt zu nutzen und eine Axialkraft zu erzeugen. Die vom Wasserstand abhängige Axialkraft wird durch einen Gelenkhebel 7, der am Kolben 3 und dem Drehlager 5 angreift, in eine Drehbewegung umgeleitet und bewegt die Welle 6. Über ein Seil 8 steht das Drehlager mit einem gleichfalls um eine stationäre Achse im Gehäuse 4 drehbaren Drehlager 9 in Verbindung, mit dem ein Hebel 10 drehfest verbunden ist, dessen freies Ende das Gegengewicht 2 trägt. Das über den Kolben 3 eingeleitete Drehmoment wird durch das Gegengewicht 2 ausgeglichen, sodass bei steigendem Wasser das Gegenwicht 2 ansteigt und je nach Wasserstand eine Wellenteildrehung erzwungen wird. Diese Teildrehung der Welle 6 wird als Antrieb der Armatur benutzt, mit dem Vorteil, dass eine Drosselung abhängig von der Wasserhöhe erfolgt. Ein oder mehrere Gegengewichte 2 bewirken zusätzlich, das sich der Querschnitt des Ablaufrohres in Abhängigkeit von der Wasserhöhe so verringert, dass eine fast konstante Abflussmenge erzielt wird. Gleichzeitig sorgt das Gegengewicht 2 bei fallender Wassersäule für eine Rückstellung des Kolbens 3, sodass ein freier Ablauf ermöglicht ist.

Die Anwendung der Ausführungsform nach den Figuren 1 bis 4 ist in der Figur 5 veranschaulicht. Gezeigt ist ein Trocken- oder Kontrollschacht 12 mit Zulaufrohr 13 und Ablaufrohr 14 für die Flüssigkeit, wobei diese mit den Rohrabschnitten 11 des nach oben abgehenden Gehäuses 4 die Form eines auf dem Kopf stehenden T bilden. Die Rohrabschnitte 11 stehen in Verbindung mit dem Zulaufrohr 13 und dem Ablaufrohr 14 und es nimmt das Gehäuse 4 in diesem Bereich den dort nicht näher veranschaulichten Kolben 3 auf. Durch die in diesem Fall vertikale Bewegung des Kolbens 3, bei Änderung der Flüssigkeitshöhe in dem strömungsmäßig gesehen vor dem Zulaufrohr 13 befindlichen Schacht oder Behältnis, wird in vorgeschriebenem Sinne die Welle 6 um einen definierten Winkel geschwenkt und entsprechend dem Gegengewicht 2 gehoben bzw. gesenkt. Des Weiteren wird die Drehbewegung der Welle 6 auf einen drehfest mit der Welle 6 verbundenen Hebelarm 15 übertragen, der im Gelenk 16 eine vertikal orientierte Stange 17 aufnimmt, mit deren unteren Ende die Armatur, die als Blende 18 ausgebildet ist, befestigt ist. Mittels dieser Blende 18 lässt sich der Durchtrittsquerschnitt des Ablaufrohres 14 mehr oder weniger abblenden bzw. es wird in der vollständig angehobenen Position der Blende 18, wie in Figur 5 veranschaulicht, der Durchtrittsquerschnitt des Abflussrohrs 14 vollständig freigegeben.

Mittels des bei der Ausführungsform nach der Figur 5 Verwendung findenden Drosselantriebs 1, im Sinne der Ausführungsform nach den Figuren 1 bis 4 und des Gegengewichts 2, wird in Abhängigkeit von der Flüssigkeitshöhe im Behälter eine annähernd konstante Ablaufmenge gewährleistet.

Mit der Bezugsziffer 21 ist eine äußere elastische Abdeckung des Kolbens 3 veranschaulicht, die dem Zweck dient, den Kolben 3 zur Flüssigkeit hin abzudichten.

Selbstverständlich kann der Drosselantrieb auch nass aufgestellt sein, somit in einem die Flüssigkeit aufnehmenden Schacht oder Behälter angeordnet sein.

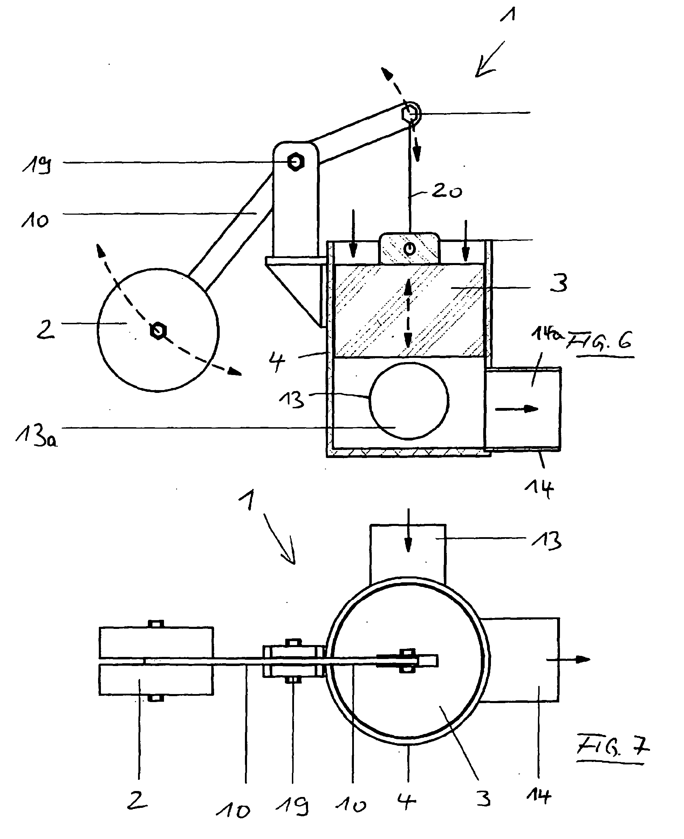

Bei der Ausführungsform nach den Figuren 6 und 7 ist der Drosselantrieb 1 als Drosselventil gestaltet und nass aufgestellt. Das Ventilgehäuse 4 weist mindestens eine Zulauföffnung 13 a und eine Ablauföffnung 14 a auf. Ein hierauf Bezug nehmendes Zulaufrohr, das vom Schacht oder Behälter abgeht, ist mit der Bezugsziffer 13, ein entsprechend Bezug nehmendes Ablaufrohr mit der Bezugsziffer 14 bezeichnet. Der Kolben 3 ist im Gehäuse 4 axial beweglich angeordnet, sodass ein Druckgefälle vom Kolben 3 zur Ablauföffnung 14 a hin, somit zwischen dem Druck, der im Sinne der beiden Pfeile in Figur 6 auf die Oberseite des Kolbens 3 wirkt, und dem Druck, der im Bereich der Ablauföffnung herrscht, eine Axialbewegung des Kolbens 3 erzeugt. Der Doppelhebel 10, der um die Achse des Drehlagers 19 schwenkbar ist, nimmt im Bereich seines einen Endes das Gegengewicht 2, im Bereich seines anderen Endes ein Seil 20 auf, an dem der Kolben 3 befestigt ist. Demzufolge ruft eine

Axialbewegung des Kolbens 3 eine Drehbewegung des Gegengewichts 2 hervor. Der Kolben 3 ist in der Ausgangsstellung so angeordnet, das der Raum zwischen Zulauf 13 a und Ablauf 14 a nicht verkleinert wird.

Das Drosselventil mit Gegengewicht wirkt mechanisch. Zur konstanten Entleerung des Schachtes oder sonstigen Behälters mit wechselnden Flüssigkeitshöhen wird das Drosselventil 1 vor der Ablauföffnung 14 a des Schachtes so angebracht, das eine Änderung der Flüssigkeitshöhe im Schacht eine Druckdifferenz zwischen Kolben 3 und Ablauföffnung 14 a bewirkt und der Kolben 3 zum Druckausgleich axial betätigt wird. Über das Gegengewicht 2 wird die Hubhöhe des Kolbens 3 und damit die Reduzierung des Ablaufquerschnitts so geregelt, dass abhängig vom Gegengewicht 2 mit Hebellänge und Axialkraft des Ventilkolbens 3 mit zugehöriger Hebellänge durch Absenkung des Kolbens 3 ein konstantes Drehmoment im Drehlager 19 bei verschiedenen Flüssigkeitsständen erreicht wird. Bei steigender Flüssigkeitshöhe im Behälter wird somit eine proportionale Verringerung des Ablaufquerschnitts im Gehäuse 4 erzwungen und eine annähernd konstante Ablaufmenge ermöglicht. Bei sinkender Flüssigkeitshöhe wird durch das Gegengewicht 2 der Kolben 3 wieder angehoben und ein freier Ablauf ermöglicht.

## Patentansprüche

1. Drosselantrieb (1) für eine Armatur (18) zum konstanten Entleeren eines Schachtes oder Behälters bei wechselnden Flüssigkeitshöhen, **gekennzeichnet durch** ein Gehäuse (4) und ein Stellteil (3), das auf Grund der **durch** die wechselnde Flüssigkeitshöhe bedingtem Druckdifferenz axial im Gehäuse (4) beweglich ist, sowie **durch** eine Einrichtung (2) zur Rückstellung des Stellteils (3), deren erforderliche Potenzialkraft zur Rückstellung des Stellteils (3) beim Bewegen des Stellteils (3) in Folge Erhöhung der Druckdifferenz erzeugt wird, wobei die Einrichtung (2) bei Druckverringerung die Rückstellung des Stellteils (3) erzwingt.

2. Drosselantrieb bei Anspruch 1, **dadurch gekennzeichnet**, das für die erforderliche Potenzialkraft zur Rückstellung des Stellteils (3) ein Gegengewicht (2), eine Federkraft oder ein andere Energiespeicher genutzt wird.

3. Drosselantrieb nach Anspruch 1 oder 2, **dadurch gekennzeichnet, dass** mehrere Einrichtungen (2) zur Rückstellung des Stellteils (3) vorgesehen sind.

4. Drosselantrieb nach einem der Ansprüche 1 bis 3, **dadurch gekennzeichnet, dass** das Stellteil (3) als Kolben ausgebildet ist, der axial im Gehäuse (4) verschieblich ist.

5. Drosselantrieb nach einem der Ansprüche 1 bis 3, **dadurch gekennzeichnet,** das die axiale Kraftübertragung des Stellteils durch eine Membrane oder andere Elastomere erbracht wird.

6. Drosselantrieb nach Anspruch 4 oder 5, **dadurch gekennzeichnet, dass** das Gehäuse (4) den nach außen führenden Kolben (3) aufweist, der so angeordnet ist, das eine Druckänderung zum Gehäuseinneren eine Axialbewegung des Kolbens (3) erzwingt und über Hebelwirkung die Teildrehung eines Drehlagers (5) mit Welle (6) erzeugt wird.

7. Drosselantrieb nach Anspruch 6, **dadurch gekennzeichnet, dass** das eine oder die mehreren Gegengewichte (2) über das Drehlager (5) so mit dem Kolben (3) verbunden sind, dass bei Erhöhung der Druckdifferenz das Gegengewicht (2) angehoben wird, sowie bei Druckverringerung das Gegengewicht (2) eine Rückstellung des Kolbens (3) erzwingt.

8. Drosselantrieb nach Anspruch 6 oder 7, **dadurch gekennzeichnet, dass** mindestens eine über das Drehlager (5) angetriebene Welle (6) aus dem Gehäuse (4) führt und die Drehung der Welle (6) zur Betätigung der Armatur (18) genutzt wird.

9. Drosselantrieb nach Anspruch 1, **dadurch gekennzeichnet, dass** er als Drosselventil (1) ausgebildet ist.

10. Drosselantrieb nach Anspruch 9, **dadurch gekennzeichnet, dass** das Drosselventil (1) folgende Merkmale aufweist:
- das Gehäuse (4) mit mindestens einer Zulauföffnung (13 a) und einer Ablauföffnung (14 a),
- den Kolben (3) der im Gehäuse (4) beweglich angeordnet ist, sodass ein Druckgefälle vom Kolben (3) zur Ablauföffnung (14 a) hin eine Axialbewegung des Kolbens (3) erzeugt,
- das Gegengewicht (2), das mit einem Hebel (10) über ein Drehlager (19) mit dem Kolben (3) beweglich verbunden ist, sodass eine Axialbewegung des Kolbens (3) eine Drehbewegung des Gegengewichts (2) hervorruft.

11. Drosselantrieb nach Anspruch 10, **dadurch gekennzeichnet, dass** der Kolben (3) in seiner Ausgangsstellung so angeordnet ist, dass der Raum zwischen Zulauf (13) und Ablauf (14) nicht verkleinert wird.

12. Drosselantrieb nach einem der Ansprüche 1 bis 11, **dadurch gekennzeichnet, dass** das Stellteil (3) die Armatur darstellt oder mittels des Stellteils (3) die Armatur (18) bewegungsschlüssig verbunden ist.

13. Drosselantrieb nach einem der Ansprüche 1 bis 12, **dadurch gekennzeichnet**, das die Armatur (18) als Schieber, Blende oder Klappe ausgebildet ist.
